# EUROPÄISCHE PATENTSCHRIFT

(11) **EP 4 686 047 B1**
(45) Veröffentlichungstag und Bekanntmachung des Hinweises auf die Patenterteilung: **22.07.2026**
(21) Anmeldenummer: 25175161.6
(22) Anmeldetag: 08.05.2025
(51) Int. Cl.: H02K 3/34, H02K 15/108

(54) **VERFAHREN UND EINRICHTUNG ZUM FALTEN EINER NUTISOLIERUNG SOWIE VERWENDUNGEN DERSELBEN**
METHOD AND DEVICE FOR FOLDING A SLOT INSULATION AND USES THEREOF
PROCÉDÉ ET DISPOSITIF DE PLIAGE D'UNE ISOLATION DE RAINURE ET LEURS UTILISATIONS

(30) Priorität: 26.07.2024 DE 102024002446
(43) Veröffentlichungstag der Anmeldung: 28.01.2026
(73) Patentinhaber: Grob-Werke GmbH & Co. KG, 87719 Mindelheim (DE)
(72) Erfinder: Ziegler, Manfred, 86856 Hiltenfingen (DE); Schmölz, Markus, 87668 Rieden (DE)
(74) Vertreter: KASTEL Patentanwälte PartG mbB

(56) Entgegenhaltungen:
- CN-A- 111 193 374
- CN-B- 116 488 377
- JP-A- 2003 244 907
- JP-A- 2015 226 379
- US-A- 3 505 729
- US-A1- 2018 083 496

## Beschreibung

Die Erfindung betrifft ein Faltverfahren zum Falten einer Nutisolierung, die in eine sich in axialer Richtung erstreckende Nut eines Bauteils einer elektrischen Maschine eingesetzt ist, um in die Nut eingesetzte Leiter zum Bilden einer Spulenwicklung elektrisch von dem die Nut ausbildenden Bereichen des Bauteils zu isolieren. Weiter betrifft die Erfindung ein Nutdeckschiebermontageverfahren zum Montieren eines Nutdeckschiebers in einer mit Leitern und Nutisolierung versehenen Nut eines Bauteils einer elektrischen Maschine unter Durchführung eines solchen Faltverfahrens. Weiter betrifft die Erfindung eine Falteinrichtung zum Falten einer Nutisolierung, die in eine sich in axialer Richtung erstreckende Nut eines Bauteils einer elektrischen Maschine eingesetzt ist, um in die Nut eingesetzte Leiter zum Bilden einer Spulenwicklung elektrisch von dem die Nut ausbildenden Bereichen des Bauteils zu isolieren. Weiter betrifft die Erfindung eine Nutdeckschiebermontagevorrichtung sowie eine Herstellanlage für einen Stator (Beispiel für das Bauteil der elektrischen Maschine), umfassend eine derartige Falteinrichtung. Weiter betrifft die Erfindung eine Steuerung sowie ein Computerprogramm mit Anweisungen für die vorgenannte Einrichtung, Vorrichtung oder Anlage zum Durchführen eines der vorgenannten Verfahren.

Zum technologischen Hintergrund und zum Stand der Technik wird auf folgende Literaturstellen verwiesen:
[1] EP 3 724 970 B1
[2] EP 4 203 262 A1
[3] EP 3 391 512 B1
[4] DE 10 2017 101 381 A1
[5] DE 1 203 375 A
[6] DE 10 2017 002 420 A1
[7] DE 10 2016 113 898 A1
[8] US 1 557 259 A
[9] US1 501 510 A
[10] EP 4 283 846 B1
[11] EP 3 743 986 B1
[12] https:/Ide.wikipedia.org/wiki/Hairpin-Technologie
[13] EP 3 391 516 B1
[14] WO 2019/166060 A1
[15] WO 2020/187 363 A1
[16] WO 2019/101 272 A1
[17] WO 2019/020 148 A1
[18] WO 2018/233 771 A1
[19] JP 2003 244907 A

In [1] sind Verfahren und Vorrichtungen zum Herstellen von Nutisolierungen für Windungsnuten eines Bauteils einer elektrischen Maschine sowie eine Herstellanlage für einen Stator bekannt, wie sie auch bei Ausführungsformen der Erfindung verwendet werden können. [2] zeigt ein weiteres Beispiel für ein Bauteil einer elektrischen Maschine mit Nutisolierungen.

[3] zeigt Verfahren und Vorrichtungen zum Einbringen von Nutisolierungen in Nuten eines Bauteils einer elektrischen Maschine. Dabei ist auch ein Faltverfahren zum Falten der Nutisolierung beschrieben und gezeigt, welches den Schritt aufweist: Bereitstellen eines Bauteils einer elektrischen Maschine mit wenigstens einer sich in axialer Richtung des Bauteils erstreckenden Nut, mit in die Nut eingesetzten Leitern zum Bilden einer Spulenwicklung und mit einer in der Nut zwischen Nut und Leitern eingesetzten Nutisolierung zur elektrischen Isolierung der Leiter von dem die Nut ausbildenden Bereich des Bauteils, wobei die Nutisolierung einen ersten Schenkel und einen zweiten Schenkel aufweist, die zwischen den Leitern und Nutflanken angeordnet sind.

[4], [5] und [6] zeigen jeweils einen Nutdeckschieber und ein Nutdeckschiebermontageverfahren. [7] zeigt eine weitere mögliche Variante zum Einbringen der Nutisolierungen. [8] und [9] zeigen ein Verfahren und eine Vorrichtung zur Nutdeckschiebermontage. [10] zeigt Verfahren und Vorrichtungen zum Vereinzeln, Ausrichten und Einsetzen von Nutdeckschiebern für einen Stator. [3] und [11] bis [13] zeigen Beispiele für Herstellanlagen von Bauteilen von elektrischen Maschinen am Beispiel von Statoren, bei welchen Herstellanlagen Ausführungsformen der Erfindung verwendet werden können.

Die Erfindung hat sich zur Aufgabe gestellt, ein hinsichtlich Prozessführung und Zuverlässigkeit verbessertes Falten von Nutisolierung und/oder ein Einsetzen von Nutdeckschiebern im Rahmen einer Großserienproduktion von Bauteilen einer elektrischen Maschine zu ermöglichen.

Zum Lösen dieser Aufgabe schafft die Erfindung ein Faltverfahren nach Anspruch 1. Ein Nutdeckschiebermontageverfahren, bei dem ein solches Faltverfahren durchgeführt wird, Einrichtungen, Vorrichtungen und Anlagen zum Durchführen des Faltverfahrens sowie eine Steuerung und ein Computerprogramm mit Anweisungen zum Durchführen des Falt- oder Montageverfahrens sind Gegenstand der Nebenansprüche.

Vorteilhafte Ausgestaltungen sind Gegenstand der Unteransprüche.

Die Erfindung schafft gemäß einem ersten Aspekt davon ein Faltverfahren zum Falten einer Nutisolierung, wobei das Faltverfahren die Schritte umfasst:
a) Bereitstellen eines Bauteils einer elektrischen Maschine mit wenigstens einer sich in axialer Richtung des Bauteils erstreckenden Nut, mit in die Nut eingesetzten Leitern zum Bilden einer Spulenwicklung und mit einer in der Nut zwischen Nut und Leitern eingesetzten Nutisolierung zur elektrischen Isolierung der Leiter von dem die Nut ausbildenden Bereich des Bauteils, wobei die Nutisolierung einen ersten Schenkel und einen zweiten Schenkel aufweist, die zwischen den Leitern und Nutflanken angeordnet sind, wobei bei wenigstens einem der Schenkel ein Längskantenbereich radial über die Leiter vorsteht und in wenigstens einer axialen Richtung aus der Nut herausragt,
b) Vorpositionieren des axial aus der Nut herausragenden und radial über die Leiter vorstehenden Teils des Längskantenbereichs indem dieser Teil in Richtung der Nutmitte bewegt wird;
c) Einfügen eines Faltwerkzeugs zwischen dem in Schritt b) in Richtung der Nutmitte bewegten Teil des Längskantenbereich und der Nutflanke und Umfalten des Längskantenbereichs in Richtung auf die Leiter mittels des Faltwerkzeugs.

Bei einigen Ausführungsformen umfasst Schritt b)
b) Vorpositionieren des axial aus der Nut herausragenden und radial über die Leiter vorstehenden Teils des Längskantenbereichs, indem dieser Teil in Richtung der Nutmitte bewegt wird, um am axialen Nutende einen Spalt zwischen dem Längskantenbereich und der Nutflanke zu erzeugen;
und Schritt c) umfasst:
   c) Einfügen eines Faltwerkzeugs in den in Schritt b) gebildeten Spalt und Umfalten des Längskantenbereichs in Richtung auf die Leiter mittels des Faltwerkzeugs.

Bei einigen Ausführungsformen wird in Schritt a) die Nutisolierung derart bereitgestellt, dass die Längskantenbereiche des ersten und des zweiten Schenkels über die Leiter vorstehen und in der wenigstens einen axialen Richtung aus der Nut herausragen.

Bei einigen Ausführungsformen werden in Schritt b) die axial aus der Nut vorstehenden und radial über die Leiter ragenden Eckbereiche des ersten und zweiten Schenkels zueinander bewegt. Bei einigen Ausführungsformen wird dabei sowohl am ersten und als auch am zweiten Schenkel jeweils der Spalt am axialen Nutende erzeugt.

Bei einigen Ausführungsformen werden in Schritt c) der Längskantenbereich des ersten und des zweiten Schenkels mittels eines oder mehrerer in den jeweiligen Spalt eingefügter Faltwerkzeuge umgefaltet.

Bei einigen Ausführungsformen enthält Schritt a) den Schritt:
a1) Bereitstellen eines Statorbauteils, in dem eine Vielzahl der Nuten vorgesehen sind.

Bei einigen Ausführungsformen enthält Schritt a) den Schritt:
a2) Bereitstellen eines Blechpakets mit einer Vielzahl der Nuten.

Bei einigen Ausführungsformen enthält Schritt a) den Schritt:
a3) Bereitstellen eines Isolationspapiers oder einer Isolationsfolie als Nutisolierung.

Bei einigen Ausführungsformen enthält Schritt a) den Schritt:
a4) Bereitstellen der Nutisolierung mit U-förmigem Profil, mit einem an dem Grund der Nut angeordneten U-Steg und dem an einer ersten Flanke der Nut angeordneten ersten Schenkel und dem an einer zweiten Flanke der Nut angeordneten zweiten Schenkel.

Bei einigen Ausführungsformen enthält Schritt a) den Schritt:
a5) Bereitstellen des Bauteils mit der Nut derart, dass in einem Mündungsbereich der Nut Einbuchtungen oder Rücksprünge für die formschlüssige Aufnahme eines Nutdeckschiebers vorgesehen sind.

Bei einigen Ausführungsformen enthält Schritt b) den Schritt:
b1) Drücken des axial vorstehenden Teils des Längskantenbereichs nach innen zur Mitte der Nut.

Bei einigen Ausführungsformen enthält Schritt b) den Schritt:
b2) Bereitstellen eines Vorpositionierwerkzeugs an der axialen Seite des Bauteils, wo der Längskantenbereich axial vorsteht, und Durchführen des Vorpositionierens mit dem Vorpositionierwerkzeug.

Bei einigen Ausführungsformen enthält Schritt b), insbesondere Schritt b2), den Schritt:
b3) Bereitstellen eines Vorpositionierwerkzeugs mit wenigstens einem in Umfangsrichtung bewegbaren Andrücker.

Bei einigen Ausführungsformen enthält Schritt b), insbesondere Schritt b2), den Schritt:
b4) Bereitstellen eines Vorpositionierwerkzeugs mit einem Rücksprung oder einer Werkzeugnut, in den oder in die ein Faltwerkzeug und/oder ein einzuführender Nutdeckschieber und/oder ein Nutdeckschiebereinführwerkzeug zum Einführen eines Nutdeckschiebers eingreifen kann.

Bei einigen Ausführungsformen enthält Schritt b), insbesondere Schritt b2), den Schritt:
b5) Bereitstellen eines Vorpositionierwerkzeugs mit einem ersten und zweiten Andrücker, die in Umfangsrichtung aufeinander zu und voneinander weg bewegbar sind und mit denen die axial aus der Nut vorstehenden und radial über die Leiter vorstehenden Teile der Längskantenbereiche des ersten und zweiten Schenkels aufeinander zu bewegt werden.

Bei einigen Ausführungsformen enthält Schritt b) den Schritt:
b6) Schwenken wenigstens eines Andrückers um eine Schwenkachse beim Vorpositionieren.

Bei einigen Ausführungsformen enthält Schritt b), insbesondere Schritt b2), den Schritt:
b7) Bereitstellen eines Vorpositionierwerkzeug mit zangenartig zueinander schwenkbaren Andrückern.

Bei einigen Ausführungsformen enthält Schritt b) den Schritt:
b8) paralleles Zustellen von Andrückern beim Vorpositionieren.

Bei einigen Ausführungsformen enthält Schritt b) den Schritt:
b9) Vorpositionieren mit Druckluft.

Bei einigen Ausführungsformen wird das Vorpositionierwerkzeug aktiv mittels eines eigenen Aktors angetrieben. Bei einigen Ausführungsformen wird das Vorpositionierwerkzeug passiv beim Einführen eines Nutdeckschiebers und/oder durch ein Nutdeckschiebereinführwerkzeug zum Einführen eines Nutdeckschiebers angetrieben. Bei einigen Ausführungsformen wird das Vorpositionieren mittels eines Vorpositionierwerkzeugs durchgeführt, welches eine oder mehrere Düsen zur Druckluftbeaufschlagung aufweist. Bei einigen Ausführungsformen werden die Düsen zum Vorpositionieren angestellt und positioniert. Bei einigen Ausführungsformen werden die axial aus der Nut herausragenden und radial über die Leiter vorstehenden Teils des Längskantenbereichs mittels Druckluft angeblasen.

Gemäß einem weiteren Aspekt schafft die Erfindung ein
Nutdeckschiebermontageverfahren zum Montieren eines Nutdeckschiebers in einer mit Leitern und Nutisolierung versehenen Nut eines Bauteils einer elektrischen Maschine, umfassend Durchführen des Faltverfahrens nach einer der voranstehenden Ausgestaltungen und Einführen des Nutdeckschiebers über die gefaltete Nutisolierung in der Nut.

Gemäß einem weiteren Aspekt schafft die Erfindung eine Falteinrichtung zum Falten einer Nutisolierung, die in eine sich in axialer Richtung erstreckende Nut eines Bauteils einer elektrischen Maschine eingesetzt ist, um in die Nut eingesetzte Leiter zum Bilden einer Spulenwicklung elektrisch von dem die Nut ausbildenden Bereichen des Bauteils zu isolieren, wobei die Nutisolierung einen ersten Schenkel und einen zweiten Schenkel aufweist, die zwischen den Leitern und Nutflanken angeordnet sind, wobei bei wenigstens einem der Schenkel ein Längskantenbereich radial über die Leiter vorsteht und in wenigstens einer axialen Richtung aus der Nut herausragt, wobei die Falteinrichtung ein Vorpositionierwerkzeug zum Vorpositionieren des axial aus der Nut herausragenden und radial über die Leiter vorstehenden Teils des Längskantenbereichs aufweist, welches Vorpositionierwerkzeug dazu eingerichtet ist, den axial aus der Nut vorstehenden Teil des Längskantenbereichs in Richtung der Nutmitte zu bewegen, und mit einem Faltwerkzeug, das dazu eingerichtet ist, zwischen dem durch das Vorpositionieren am axialen Anfang der Nut zur Nutmitte bewegten Teil des Längskantenbereichs und der Nutflanke einzugreifen und den Längskantenbereich im gesamten Verlauf der Nut in Richtung auf die Leiter zu falten.

Bei einigen Ausführungsformen ist das Faltwerkzeug dazu eingerichtet, in einen durch das Vorpositionieren am axialen Anfang der Nut gebildeten Spalt zwischen dem Längskantenbereich und der Nutflanke einzugreifen und den Längskantenbereich im gesamten Verlauf der Nut in Richtung auf die Leiter zu falten.

Bei einigen Ausführungsformen ist vorgesehen, dass das Vorpositionierwerkzeug im bestimmungsgemäßen Gebrauch axial seitlich des Bauteils positioniert ist.

Bei einigen Ausführungsformen ist vorgesehen, dass das Vorpositionierwerkzeug wenigstens einen Andrücker zum Drücken des axial aus der Nut vorstehenden Teils des Längskantenbereichs in Richtung Nutmitte aufweist.

Bei einigen Ausführungsformen ist vorgesehen, dass das Vorpositionierwerkzeug einen ersten und einen zweiten in Umfangsrichtung aufeinander zu und voneinander weg bewegbaren Andrücker aufweist.

Bei einigen Ausführungsformen ist vorgesehen, dass das Vorpositionierwerkzeug wenigstens ein bewegbares Element zum Angreifen an dem axial vorstehenden Längskantenbereich aufweist, welches mit wenigstens einem Rücksprung oder wenigstens einer Werkzeugnut versehen ist, in die das Faltwerkzeug oder ein Nutdeckschiebermontagewerkzeug oder ein in die Nut einzusetzender Nutdeckschieber eingreifen kann.

Bei einigen Ausführungsformen ist vorgesehen, dass der wenigstens eine Andrücker um eine Schwenkachse schwenkbar ist.

Bei einigen Ausführungsformen ist vorgesehen, dass der erste und zweite Andrücker zangenartig zueinander bewegbar sind.

Bei einigen Ausführungsformen ist vorgesehen, dass der wenigstens eine Andrücker in Umfangsrichtung verschiebbar ist.

Bei einigen Ausführungsformen ist vorgesehen, dass der erste und der zweite Andrücker in Umfangsrichtung antiparallel zueinander verschiebbar sind.

Bei einigen Ausführungsformen ist vorgesehen, dass das Vorpositionierwerkzeug wenigstens eine Düse aufweist, die dazu eingerichtet ist, den axial aus der Nut vorstehenden Teils des Längskantenbereichs mittels Druckluft anzublasen, um ihn in Richtung der Nutmitte zu bewegen.

Gemäß einem weiteren Aspekt schafft die Erfindung eine Nutdeckschiebermontagevorrichtung, umfassend eine Falteinrichtung nach einer der voranstehenden Ausgestaltungen und eine Nutdeckschiebereinführeinrichtung zum Einführen eines Nutdeckschiebers über die gefaltete Nutisolierung in die Nut.

Gemäß einem weiteren Aspekt schafft die Erfindung eine Herstellanlage zum Herstellen eines Stators, umfassend eine Falteinrichtung nach einer der voranstehenden Ausgestaltungen und/oder eine Nutdeckschiebermontagevorrichtung gemäß der voranstehenden Ausgestaltung.

Gemäß einem weiteren Aspekt schafft die Erfindung eine computerimplementierte Steuerung für eine Falteinrichtung, eine Nutdeckschiebermontagevorrichtung oder eine Herstellanlage nach einer der voranstehenden Ausgestaltungen, wobei die Steuerung dazu eingerichtet ist, die Falteinrichtung zum Durchführen des Faltverfahrens gemäß einer der oben genannten Ausführungsformen anzusteuern oder die Nutdeckschiebermontagevorrichtung zum Durchführen des Nutdeckschiebermontageverfahrens gemäß einer der oben genannten Ausführungsformen anzusteuern.

Gemäß einem weiteren Aspekt schafft die Erfindung ein Computerprogramm, umfassend Anweisungen, die eine Einrichtung, Vorrichtung oder Anlage nach einer der voranstehenden Ausgestaltungen dazu veranlassen, das Verfahren nach einer der oben erwähnten Ausführungsformen durchzuführen.

Bei einigen Ausführungsformen umfasst die Falteinrichtung, die Nutdeckschiebermontagevorrichtung oder die Herstellanlage eine Steuerung gemäß der oben erwähnten Ausführung oder eine Steuerung umfassend einen Prozessor und einen Speicher, in dem ein Computerprogramm gemäß der oben genannten Ausgestaltung geladen ist.

Mit einigen Ausführungsformen der Erfindung werden Vorrichtungen und Verfahren zur Verfügung gestellt, mit denen in Nuten eines Bauteils einer elektrischen Maschine unter Zwischenfügung von Nutisolierungen aufgenommene Spulenwicklungsteile mit geringerem Aufwand sowie schnell und prozesssicher abgedeckt und/oder gesichert werden können.

Ausführungsbeispiele der Erfindung werden im Folgenden anhand der beigefügten Zeichnungen näher erläutert. Darin zeigt:
- Fig. 1: eine Vorderansicht in axialer Richtung auf einen Bereich eines Bauteils einer elektrischen Maschine am Beispiel eines Stators, wobei zu Darstellungszwecken nur eine Nut einer Vielzahl von Wicklungsnuten, in denen mehrere Leiter einer Spulenwicklung des Bauteils mit einer Nutisolierung und einem Nutdeckschieber aufgenommen sind, gezeigt ist;
- Fig. 2: eine Ansicht auf den Bereich des Bauteils bei einem Faltverfahren zum Falten der Nutisolierung gemäß einem Vergleichsbeispiel mit einer Falteinrichtung gemäß einem Vergleichsbeispiel;
- Fig. 3: eine perspektivische Ansicht des mit der Nut versehenen Bereichs des Bauteils nach einem ersten Schritt eines Faltverfahrens gemäß einem Ausführungsbeispiel der Erfindung, in dem das Bauteil mit der Nut, der darin eingesetzten Nutisolierung und die in der Nut aufgenommenen Leiter bereitgestellt werden;
- Fig. 4: eine Ansicht wie in Fig. 3 am Anfang eines zweiten Schritts des Faltverfahrens, in dem eine Vorpositionierung eines Bereichs der Nutisolierung erfolgt;
- Fig. 5: eine Ansicht wie in Fig. 3 und 4 am Ende des zweiten Schritts;
- Fig. 6: eine axiale Vorderansicht des in den Fig. 3 bis 5 gezeigten Bereichs, wobei links die in Fig. 4 gezeigte Situation zu Beginn der Vorpositionierung und rechts die in Fig. 5 gezeigte Situation zum Ende der Vorpositionierung dargestellt ist;
- Fig. 7: eine axiale Vorderansicht des in den Fig. 3 bis 6 gezeigten Bereichs zu Beginn eines auf das Vorpositionieren folgenden weiteren Schritts des Faltverfahrens, wobei ein Umfalten von Bereichen der Nutisolierung mittels eines Faltwerkzeugs erfolgt;
- Fig. 8: eine teils geschnittene Draufsicht in radialer Richtung auf den in Fig. 4 gezeigten Bereich zu Beginn des Vorpositionierens, wobei eine erste Ausführungsform eines Vorpositionierwerkzeugs zum Durchführen des Schritts schematisch dargestellt ist;
- Fig. 9: eine Ansicht wie in Fig. 6 rechts, wobei das Vorpositionieren mittels einer zweiten Ausführungsform des Vorpositionierwerkzeugs dargestellt ist;
- Fig. 10: eine Ansicht wie in Fig. 4, wobei der Schritt des Vorpositionierens mittels einer dritten Ausführungsform des Vorpositionierwerkzeugs dargestellt ist;
- Fig. 11: eine perspektivische Ansicht des mit der Nut versehenen Bereichs des Bauteils nach dem zweiten Schritt des Faltverfahrens gemäß einem weiteren Ausführungsbeispiel der Erfindung;
- Fig. 12: eine axiale Vorderansicht der in Fig. 11 gezeigten Situation; und
- Fig. 13: eine axiale Vorderansicht des mit der Nut versehenen Bereichs des Bauteils während des dritten Schritts des Faltverfahrens gemäß dem weiteren Ausführungsbeispiel der Erfindung.

Die Erfindung liegt auf dem Gebiet der Herstellung, insbesondere Großserienherstellung, von Bauteilen von elektrischen Maschinen mit Spulenwicklung, wie z.B. Rotoren und Statoren. Ausführungsbeispiele der Erfindung werden im Folgenden am Beispiel der Herstellung eines Stators 10 erläutert.

Bei einigen Ausführungsformen weist der Stator 10 ein Blechpaket 12 mit einer Vielzahl von Wicklungsnuten 14 auf, die in Umfangsrichtung an dem Blechpaket 12 verteilt vorgesehen sind und die zur Aufnahme von Leitern 16 einer Spulenwicklung 18 dienen. Von den Wicklungsnuten 14, die im Folgenden einfach als Nuten 14 bezeichnet werden, ist zu Darstellungszwecken in den beigefügten Zeichnungen jeweils nur eine dargestellt. Die im Folgenden erläuterten Schritte und Merkmale sind an den anderen Nuten 14 jeweils analog vorgesehen.

In dem Beispiel ist die Nut 14 (jede Nut 14) eine nach innen öffnende Nut eines Innenläufermotors. Die im folgenden erläuterten Verfahren, Einrichtungen und Vorrichtungen sind analog auch für nach außen öffnende Nuten eines Außenläufermotors anwendbar.

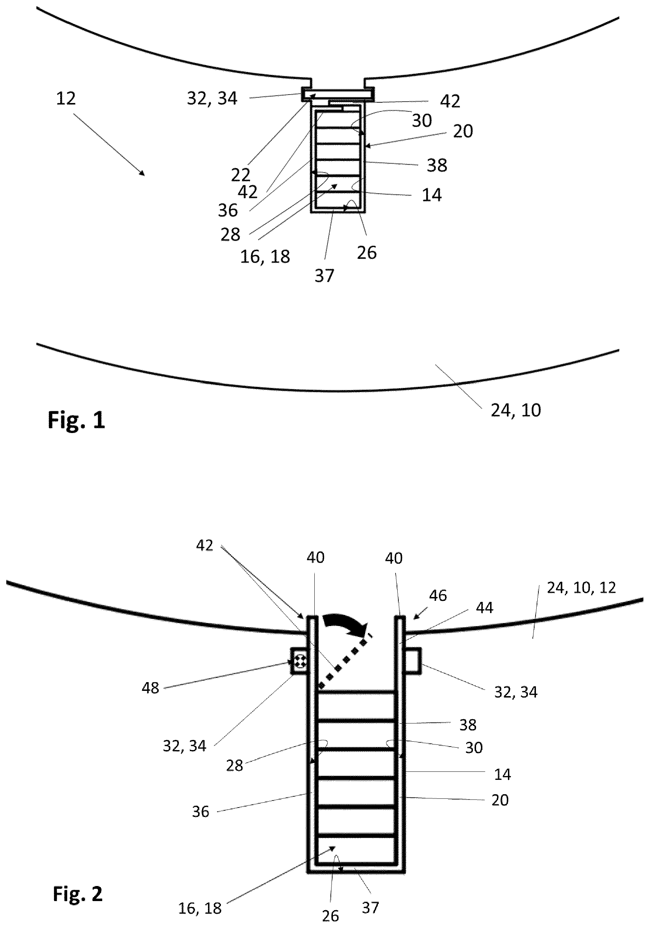

Der z.B. in Fig. 1 gezeigte Stator 10 kann z.B. in einer Herstellanlage, wie sie in einer der Literaturstellen [3] oder [11] bis [18] offenbart sind, mit einer Spulenwicklung 18 versehen werden. Dabei werden die Leiter 16 in die Nuten 14 eingefügt. Zwischen den Leitern 16 und den diese aufnehmende Nut 14 ist eine Nutisolierung 20 eingefügt, wie dies beispielsweise aus den eingangs erwähnten Literaturstellen [1] bis [3] und [7] bekannt ist.

Wie in Fig. 1 dargestellt, die die Nut 14 mit den Leitern 16 und der Nutisolierung 20 im fertigen Stator 10 zeigt, können die Leiter 16 mit einem Nutdeckschieber 22 abgedeckt sein.

Im Folgenden werden anhand der beigefügten Figuren bevorzugte Ausgestaltungen eines Faltverfahrens zum Umfalten der Nutisolierung 20 erläutert, welches beispielsweise vor oder im Verlauf einer Nutdeckschiebermontage zum Montieren des Nutdeckschiebers 22 in die Nut 14 eines Bauteils 24 einer elektrischen Maschine erläutert. Wie erwähnt, weist das Bauteil 24 der elektrischen Maschine, bei dem es sich insbesondere um einen Stator 10 oder einen Rotor (nicht dargestellt) handeln kann, eine Spulenwicklung 18 auf. Die Spulenwicklung 18 ist zum Beispiel mit einer Spulenmatte oder Wellenwicklungsmatte ausgebildet, wie sie aus den Literaturstellen [14] bis [18] bekannt ist, und weist die Leiter 16 auf, die beispielsweise durch Wicklungsköpfe verbundene geradlinigen Drahtabschnitten sind. Die Leiter 16 werden beispielweise in aus einer der Literaturstellen [3], [6] oder [18] bekannten Weise in die Nuten 14 des Bauteils 16 eingefügt. Weiter sind Nutisolierungen 20 vorgesehen, die zwischen den Nutberandungen, d.h. insbesondere einem Nutgrund 26 und einer ersten und zweiten Nutflanke 28, 30 und den in den Nuten 14 eingefügten Leitern 16 eingefügt sind.

Der Nutdeckschieber 22 dient insbesondere dazu, die in die Nuten 14 eingefügten Leiter 15 gegen Herausfallen zu sichern. Bei einigen Ausführungsformen lässt sich mit den Nutdeckschiebern 22 auch das Verhalten des Bauteils in einem Imprägnierprozess und/oder das Isolierverhalten verbessern.

Wie Fig. 1 zeigt, kann der Nutdeckschieber 22, der die Leiter 16, z.B. Drähte, und die z.B. aus Papier (Isolationspapier) oder aus Folie (Isolationsfolie) ausgebildeten Nutisolierung 20 in Einbuchtungen oder Rücksprüngen 32 im Mündungsbereich der Nut 14 formschlüssig eingefügt sein. Beispielsweise weist der Mündungsbereich der Nut 14 eine Nutdeckschieber-Aufnahme-Nut 34 zur Aufnahme des Nutdeckschiebers 22 auf. Bei einigen Statorausführungen kann demnach der Nutdeckschieber 22 im Blechpaket 12 in einer Nutdeckschieber-Aufnahme-Nut 34 gefügt werden.

Bei einigen Ausführungsformen wird die Nutisolierung 22 (z.B. ein NutIsolationspapier) vor dem Fügen des Nutdeckschieber 22 zu einem "O" gefaltet.

Fig. 2 zeigt ein Faltverfahren zum Durchführen eines solchen Faltens mit einem Faltwerkzeug 48 gemäß einem Vergleichsbeispiel.

Die Nutisolierungen 20 sind z.B. zunächst U-förmig, um die Leiter 16 beim Einfügen der Spulenwicklung 18 in radialer Richtung aufzunehmen. Dementsprechend weist die Nutisolierung 20 einen ersten Schenkel 36 an der ersten Nutflanke 28 und einen zweiten Schenkel 38 an der zweiten Nutflanke 30 auf. Die Endbereiche der Schenkel 36, 38, an welchen die Längskanten 40 der Nutisolierung 20 ausgebildet sind und die im Folgenden als Längskantenbereiche 42, 44 bezeichnet werden, sollen durch das Faltverfahren auf die Leiter 16 zu umgefaltet werden. Hierbei kann ein Überstand 46 - Abschnitt des Längskantenbereichs 42, 44, der über die Wicklungs-Nut 14 hervorsteht oder übersteht, z.B. Überstand des Papiers über den Innendurchmesser des Blechpakets - sehr gering ausfallen oder sogar negativ ausfallen (kein Überstand), so dass die Nutisolierung 20 durch ein am Innendurchmesser des Blechpakets 12 angreifendes Faltwerkzeug nicht mehr eingefangen werden kann.

Bei dem in Fig. 2 dargestellten Vergleichsbeispiel muss daher für das Faltwerkzeug 48 die Nutdeckschieber-Aufnahme-Nut 34 genutzt werden, um das sehr steife Papier oder dergleichen der Nutisolierung 20 einzufangen und zu falten. Die Nutdeckschieber-Aufnahme-Nut 34 im Blechpaket 12 kann je nach Geometrie des Nutdeckschiebers 22 sehr klein ausgeführt oder ist bei einigen Ausführungen gar nicht vorhanden.

Gemäß dem Vergleichsbeispiel von Fig. 2 muss demnach ein sehr kleines und filigranes Faltwerkzeug 48 in die Nutdeckschieber-Aufnahme-Nut 34 hinter dem Längskantenbereich 42 eintauchen und den Längskantenbereich 42 nach innen in die Wicklungs-Nut 14 verdrängen/falten.

Dieses kleine Faltwerkzeug 48 ist stark belastet und muss sehr präzise positioniert werden. Es kann leicht zerstört werden und dies führt zu Stillstandzeiten der Maschine.

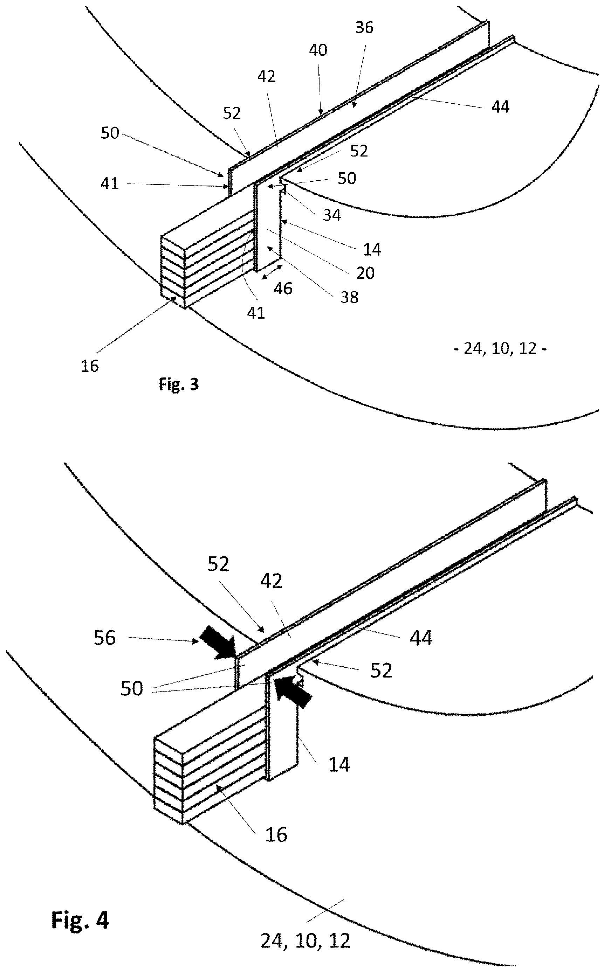

Im Folgenden werden einige Ausführungsbeispiele für Faltverfahren und Falteinrichtungen anhand der Fig. 3 bis 10 näher erläutert, mit denen umzufaltende Bereiche 42, 44 der Nutisolierung 20 vorpositioniert werden, sodass die Faltwerkzeuge 48 größer und stabiler hergestellt werden können.

Das Faltverfahren zum Falten der Nutisolierung 20, umfasst zunächst den in Fig. illustrierten Schritt:
a) Bereitstellen des Bauteils 24 einer elektrischen Maschine mit wenigstens einer sich in axialer Richtung des Bauteils 24 erstreckenden (Wicklungs-)Nut 14, mit in die Nut 14 eingesetzten Leitern 16 zum Bilden der Spulenwicklung 18 und mit einer in der Nut 14 zwischen Nut 14 und Leitern 16 eingesetzten Nutisolierung 20, die zur elektrischen Isolierung der Leiter 16 von dem die Nut 14 ausbildenden Bereich 26, 28, 30 des Bauteils 24 ausgebildet ist, wobei die Nutisolierung 20 einen ersten Schenkel 36 und einen zweiten Schenkel 38 aufweist, die zwischen den Leitern 16 und Nutflanken 28, 30 angeordnet sind, wobei bei wenigstens einem der Schenkel 36, 38 ein Längskantenbereich 42, 44 radial über die Leiter vorsteht und in wenigstens einer axialen Richtung aus der Nut herausragt.

Schritt a) lässt sich in der vorerwähnten, an sich aus den vorgenannten Literaturstellen [1] bis [3], [7] oder [11] bis [18] bekannter Weise durch Einfügen der Nutisolierungen 20 und der Leiter 16 in die Nuten 14 des Blechpakets 12 des Stators 10 durchführen, wobei aber die Nutisolierungen 20 mit einer axialen Länge, die größer als die axiale Erstreckung der Nut (oder des Blechpakets 12) ist, bereitgestellt wird und mit axialem Überstand eingefügt wird, so dass ein Teil 50 zumindest einer der Längskantenbereiche 42, 44 axial über die Nut 14 herausragt. Bei einigen nicht dargestellten Ausführungsformen ist nur der jeweilige Längskantenbereich 42, 44 länger ausgeführt; bei den dargestellten Ausführungen ist die gesamte Nutisolierung 20 länger als die Nut 14 ausgebildet, so dass sie insgesamt axial aus der Nut 14 herausragt. Somit steht auch ein Teil 50 eines jeden der beiden Längskantenbereiche 42, 44 axial aus der Nut 14 heraus.

Die Nutisolierung 20 wird insbesondere mit U-förmigem Profil mit einem U-Steg 37, mit dem ersten Schenkel 36 und mit dem zweiten Schenkel 38 bereitgestellt, so dass der U-Steg 37 an dem Grund 26 der Nut 24 angeordnet ist, der erste Schenkel 36 an der ersten Flanke 28 der Nut 14 angeordnet ist und der zweite Schenkel 38 an der zweiten Flanke 30 der Nut 14 angeordnet ist.

Wie in Fig. 3 gezeigt, ragt dann an den Stirnseiten des Stators 10 das Nutisolationspapier - Beispiel für Nutisolierung 20 - etwas aus den Nuten 14 heraus. Mit anderen Worten gibt es einen axialen Überstand 46.

Das Faltverfahren weist die folgenden weiteren Schritte auf:
b) Vorpositionieren des axial aus der Nut 14 herausragenden und radial über die Leiter 16 vorstehenden Teils 50 des Längskantenbereichs 42, 44, indem dieser Teil 50 in Richtung der Mitte der Nut 14 - Nutmitte - bewegt wird, um (lediglich) am axialen Nutende 52 einen Spalt 54 zwischen dem Längskantenbereich 42, 44 und der Nutflanke 28, 30 zu erzeugen; und
c) Einfügen eines Faltwerkzeugs 48 in den in Schritt b) gebildeten Spalt 54 und Umfalten des Längskantenbereichs 42, 44 in Richtung auf die Leiter 16 mittels des Faltwerkzeugs 48.

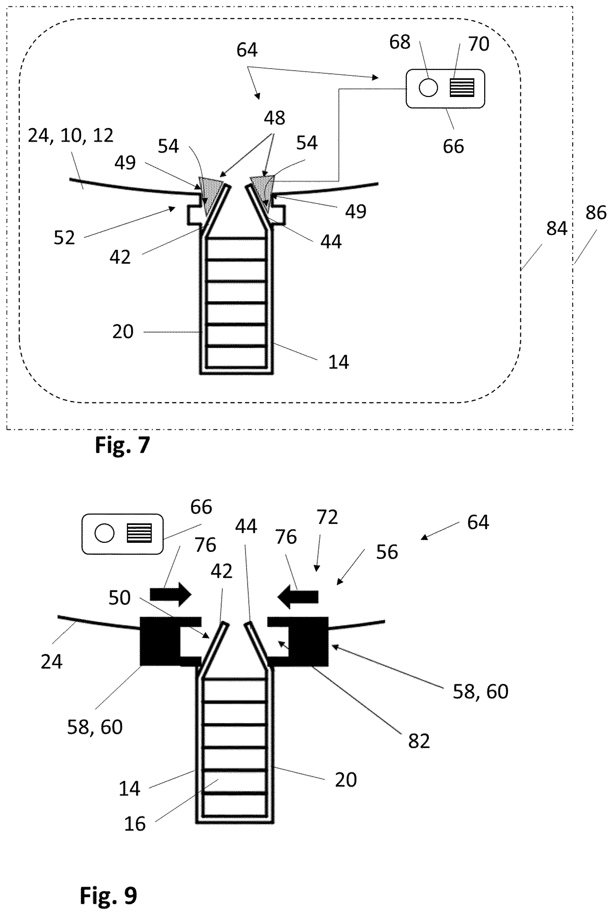

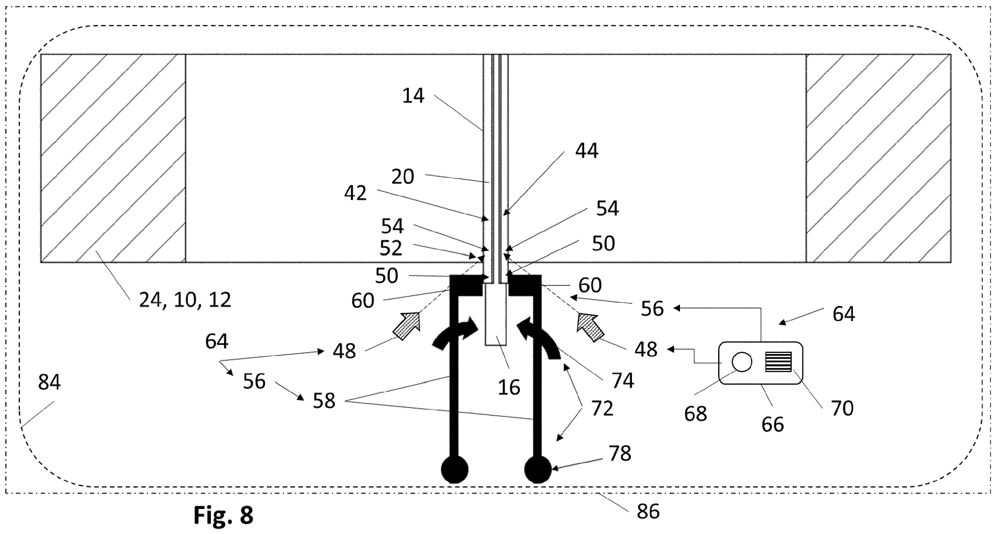

Schritt b) ist in den Fig. 4 bis 6 illustriert. Schritt c) ist in Fig. 7 gezeigt. Ausführungsbeispiele für ein Vorpositionierwerkzeug 56 zum Durchführen von Schritt b) sind in den Fig. 8 bis 10 dargestellt.

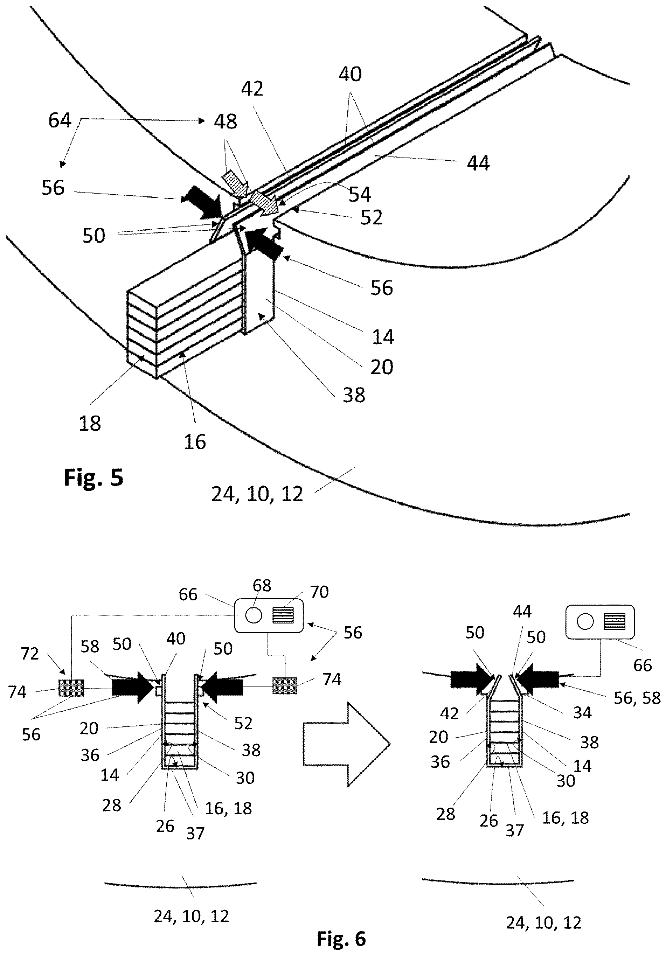

Wie in Fig. 4 und Fig. 6, linke Darstellung, zu sehen, die den Beginn von Schritt b) andeuten, kann das Vorpositionierwerkzeug 56 an dem axialen Überstand, genauer an dem Teil 50 der Längskantenbereiche 42, 44 angreifen, der axial aus der Nut 14 herausragt und radial über die Leiter 16 hervorsteht. Insbesondere handelt es sich bei dem vorstehenden Teil 50 um einen Eckbereich der Nutisolierung 20 im Bereich einer durch die Längskante 40 und die in Radialrichtung verlaufende Endkante 41 des jeweiligen Schenkels 36,38 gebildeten Ecke. Das Vorpositionierwerkzeug 56 kann z.B. wie in Fig. 8 bis 10 gezeigt bewegliche Elemente 58, z.B. mit Andrückern 60 und/oder mit Düsen 62 aufweisen, die in Arbeitsstellung zugestellt werden können.

Im Bereich der Stirnseite des Bauteils 24 (axial versetzt zu dem Bauteil 24, z.B. zu einer nicht dargestellten Bauteilhalterung) gibt es genügend Platz für das Vorpositionierwerkzeug 56 und dessen bewegliche Elemente 58. Das Vorpositionierwerkzeug drückt z.B. mit Andrückern 60 und/oder mit Druckluft 63 seitlich auf den axial vorstehenden Teil der Längskantenbereiche 42, 44 der Nutisolierung und drängt diese in Richtung Mitte der Nut, wie dies in Fig. 5 und Fig. 6 rechts dargestellt ist. Hierbei reicht es, wenn nur der (axiale) Anfang des Längskantenbereichs 42, 44 nach innen positioniert wird.

Dadurch entsteht der in Fig. 7 gezeigte Spalt 54 und ein erweiterter nutzbarer Bereich.

Durch den wesentlich größeren Bereich, der in Radialrichtung - z.B. nach radial innen hin - offen ist, kann das Faltwerkzeug 48 stabiler ausgeführt werden, zudem muss die Positionierung des Faltwerkzeuges 48 nicht so präzise eingestellt werden. Zudem ist der radiale Überstand des Schenkels 36, 38 der Nutisolation 20 in den Innendurchmesser des Blechpakets 12 nicht mehr prozessrelevant und die Deckschieber-Aufnahme-Nut 34 zum Führen des Nutdeckschiebers 22 ist ebenfalls nicht erforderlich.

Einige Ausführungsbeispiele einer Falteinrichtung 64 weisen - zusätzlich zu einer nicht gezeigten Bauteilaufnahme zum Halten des Bauteils 24 - das Vorpositionierwerkzeug 56, das Faltwerkzeug 48 und eine computerimplementierte Steuerung 66 mit Prozessor 68 und Speicher 70 auf, in dem ein Computerprogramm mit Steueranweisungen zum Durchführen des Faltverfahrens gespeichert ist.

Das Vorpositionierwerkzeug 56 ist demnach zusätzlich zu dem eigentlichen Faltwerkzeug 48 als separate Baueinheit ausgebildet. Das Faltwerkzeug 48 ist nur schematisch dargestellt, da seine Ausbildung je nach Geometrie unterschiedlich sein kann. In einigen Ausführungsformen ist das Faltwerkzeug 48 axial entlang der Nut 14 beweglich. Bei einigen Ausführungsformen ist ein erstes Faltwerkzeug 48 zum Umfalten des ersten Längskantenbereich 42 vorgesehen, und weiter ist ein zweites Faltwerkzeug zum Umfalten des zweiten Längskantenbereichs vorgesehen. Bei anderen Ausführungsformen ist ein Faltwerkzeug 48 mit einem ersten und zweiten Umformbereich zum Umformen des jeweiligen Längskantenbereich 42, 44 vorgesehen. Das jeweilige Faltwerkzeug oder der jeweilige Umformbereich weist ein Einführende 49 zum Einführen in den am Nutanfang zwischen dem ersten Längskantenbereich 42 und der ersten Nutflanke 28 gebildeten Spalt 54 oder zum Einführen in den zwischen dem zweiten Längskantenbereich 44 und der zweiten Nutflanke 30 gebildeten Spalt 54 auf. Von dem Einführende 49 ausgehend ist in an sich bekannter Weise eine gekrümmte Umfaltfläche vorgesehen, die beim Verfahren des Faltwerkzeugs 48 in axialer Richtung das Umlegen und Umfalten des jeweils zugeordneten Längskantenbereichs 42, 44 auf die Leiter 16 zu bewirkt.

Einige Ausführungsformen für das Vorpositionierwerkzeug 56 werden im Folgenden anhand der Darstellung der Fig. 8 bis 10 erläutert. Bei einigen Ausführungsformen weist das Vorpositionierwerkzeug 56 eine Bewegungseinrichtung 72 zum Bewegen der Elemente 58 auf.

Bei den dargestellten Ausführungsformen ist das Vorpositionierwerkzeug 56 im bestimmungsgemäßen Gebrauch axial seitlich des Bauteils 24 positioniert ist.

Bei den dargestellten Ausführungsformen weist das Vorpositionierwerkzeug 56 ein erstes und ein zweites bewegliches Element 58 auf. Jedes der beweglichen Elemente weist bei den Ausführungen der Fig. 8 und 9 einen Andrücker 60 zum Drücken des axial aus der Nut vorstehenden Teils 50 des Längskantenbereichs 42, 44 in Richtung Nutmitte auf. Demnach ist ein erster und ein zweiter in Umfangsrichtung aufeinander zu und voneinander weg bewegbaren Andrücker 60 vorgesehen.

Bei einigen Ausführungsformen, von denen ein Beispiel in Fig. 9 dargestellt ist, hat das wenigstens eine bewegbare Element 58 des Vorpositionierwerkzeugs 56, welches zum Angreifen an dem axial vorstehenden Längskantenbereich dient, wenigstens einen Rücksprung 80, beispielsweise in Form wenigstens einer Werkzeugnut 82, in die das Faltwerkzeug 48 oder ein Nutdeckschiebermontagewerkzeug (nicht dargestellt) oder ein in die Nut einzusetzender Nutdeckschieber 22 eingreifen kann.

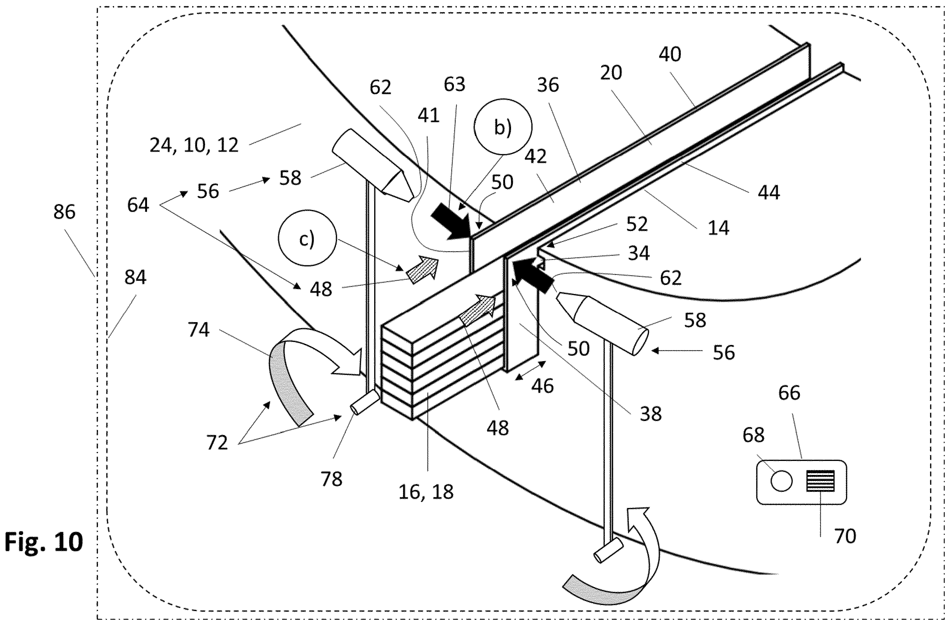

Bei einigen Ausführungsformen, von denen ein Beispiel in Fig. 10 dargestellt ist, weist jedes bewegliche Element 58 wenigstens eine Düse 62 auf, die dazu eingerichtet ist, den axial aus der Nut vorstehenden Teil 50 des Längskantenbereichs 42, 44 mittels Druckluft 63 anzublasen, um ihn in Richtung der Nutmitte zu bewegen.

Es sind unterschiedliche Ausführungen der Bewegungseinrichtung 72 möglich. Die beweglichen Elemente 58 können sowohl aktiv als auch passiv, z.B. durch den Hub des Faltwerkzeuges 48, angetrieben werden. Demnach weist bei einigen Ausführungsformen die Bewegungseinrichtung 72 wenigstens einen durch die Steuerung 68 ansteuerbaren Aktor 74 auf. Bei einigen Ausführungsformen weist die Bewegungseinrichtung 72 ein (nicht dargestelltes) Getriebe zum Umsetzen einer (Anstell-)Bewegung des Faltwerkzeugs 48 in eine Bewegung der Elemente 58 auf.

Bei einigen Ausführungsformen, von denen ein Beispiel in Fig. 8 dargestellt ist, sind die Elemente 58 um eine Schwenkachse 78 der Bewegungseinrichtung 72 schwenkbar. Zum Beispiel sind die Andrücker 60 wie eine Spitzzange ausgeführt und mit einem Drehpunkt versehen.

Bei einigen Ausführungsformen, von denen ein Beispiel in Fig. 9 dargestellt ist, sind die Elemente 58 in Umfangsrichtung verschiebbar. Demnach weist die Bewegungseinrichtung 72 eine Führung 76 für die Verschiebebewegung der Elemente 58 auf. Beispielsweise werden die Andrücker 60 parallel zugestellt, wie zwei Backengreifer.

Wie in Fig. 9 dargestellt, sind die Andrücker 60 bei einigen Ausführungsformen mit den Werkzeugnuten 82 versehen, sodass die Faltwerkzeuge 48 noch mehr Luft zum Einfangen des Papiers nutzen können.

Zum Montieren des Nutdeckschiebers 22 in die mit Leiter 16 und Nutisolierung 20 versehene Nut 14 des Bauteils 24 wird bei zunächst das Faltverfahren gemäß einer der voranstehenden Ausführungsformen durchgeführt, wonach ein Einführen des Nutdeckschiebers 22 über die gefaltete Nutisolierung 20 in der Nut 14 erfolgt.

Eine entsprechende in den Fig. 8 und 9 nur schematisch als Block dargestellte Nutdeckschiebermontagevorrichtung 84 zum Durchführen des vorgenannten Nutdeckschiebermontageverfahrens weist demnach die Falteinrichtung 64 gemäß einer der voranstehend erläuterten Ausführungen und ein Werkzeug zum Einführen des Nutdeckschiebers 22 auf. Ein solches Werkzeug ist dem Fachmann z.B. aus den Literaturstellen [4] bis [6] bekannt, so dass es hier nicht näher erläutert wird. Es wird für weitere Einzelheiten auf diese Literaturstellen verwiesen.

Die Falteinrichtung 64 ist beispielweise Teil einer ebenfalls nur schematisch als Block dargestellten Herstellanlage 86 für einen Stator 10. Die weiteren Anlagenteile solche Herstellanlagen 86 sind dem Fachmann aus den eingangs genannten Literaturstellen hinlänglich bekannt.

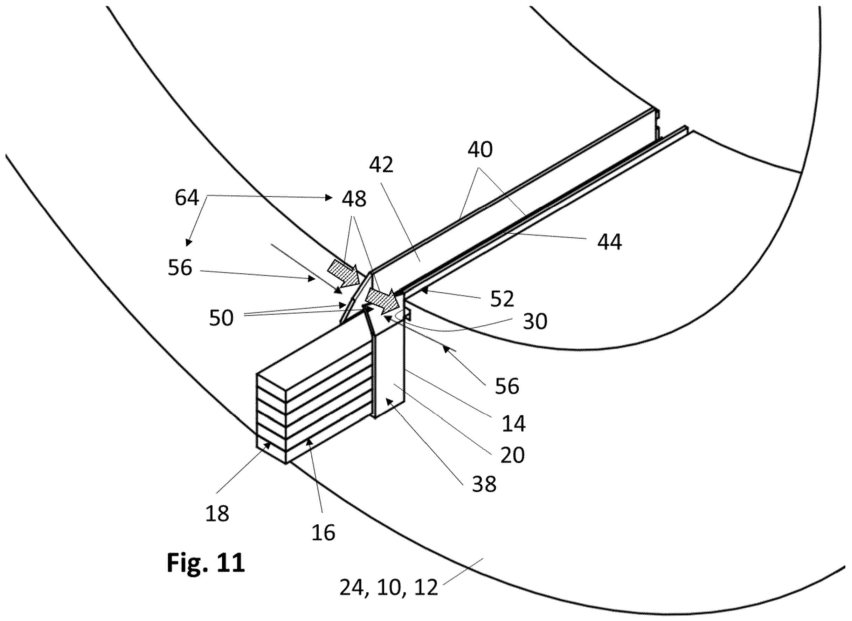

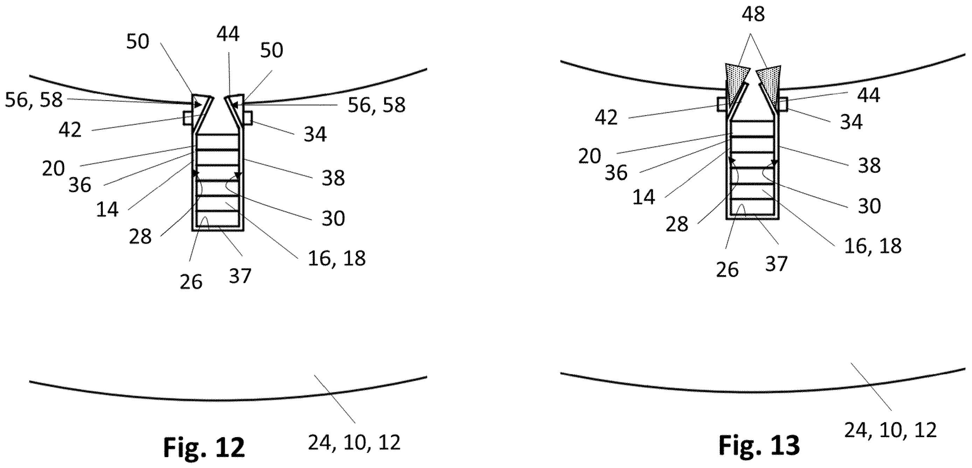

Fig. 11 zeigt eine perspektivische Ansicht des mit der Nut versehenen Bereichs des Bauteils 24 nach dem zweiten Schritt b) des Faltverfahrens gemäß einem weiteren Ausführungsbeispiel der Erfindung. Fig. 12 zeigt die gleiche Situation in axialer Vorderansicht. Fig. 13 zeigt die axiale Vorderansicht wie in Fig. 12 zu Beginn des Schritts c), wo Faltwerkzeuge 48 zum Umfalten eingeführt werden Wie in Fig. 11 bis 13 gezeigt, muss bei dem Vorpositionieren nicht unbedingt der Spalt 54 erzeugt werden. Bei einigen Ausführungsformen ist die Nutisolierung 20 aus Papier gebildet, das nur eine gewisse Steifigkeit hat. Es muss sich daher beim Vorpositionieren nicht zwangsläufig ein Spalt bilden. Bei der in Fig. 11 und 12 gezeigten Variante des Schritts b) - Vorpositionieren - werden lediglich die äußeren Papierenden - Beispiel für den zu bewegenden Teil 50 (Eckbereiche) der Längskantenbereiche 42, 44 - tangential zur Nutmitte hin bewegt. Das Papier im hinteren Teil der Nut kann dabei "offen" bleiben. Dennoch bleibt der Vorteil bestehen, da das Faltwerkzeug 48 das Papier so einfangen kann. Wie in Fig. 13 gezeigt kann das Faltwerkzeug 48 zwischen dem jeweils zur Nutmitte hin bewegten Teil 50 des Längskantenbereichs 42, 44 und der Nutflanke 28, 30 eingefügt werden.

Es ist ein Faltverfahren zum Falten einer Nutisolierung (20) beschrieben worden mit dem Schritt: a) Bereitstellen eines Bauteils (24) einer elektrischen Maschine in einer Nut (14) eingesetzten Leitern (16) einer Nutisolierung (20) zur elektrischen Isolierung der Leiter (16) von dem die Nut (14) ausbildenden Bereich des Bauteils (24), wobei die Nutisolierung (20) einen ersten Schenkel (36) und einen zweiten Schenkel (38) aufweist. Zur Verbesserung des Verfahrens insbesondere hinsichtlich Prozessführung und Zuverlässigkeit wird vorgeschlagen, dass Schritt a) derart durchgeführt wird, dass bei wenigstens einem der Schenkel (36, 38) ein Längskantenbereich (42, 44) radial über die Leiter (16) vorsteht und in wenigstens einer axialen Richtung aus der Nut (14) herausragt, und dass das Verfahren weiter die Schritte umfasst: b) Vorpositionieren des axial aus der Nut (14) herausragenden und radial über die Leiter (16) vorstehenden Teils (50) des Längskantenbereichs (42, 44), indem dieser Teil (50) in Richtung der Nutmitte bewegt wird, um vorzugsweise am axialen Nutende (52) einen Spalt (54) zwischen dem Längskantenbereich (42, 44) und der Nutflanke (28, 30) zu erzeugen; und c) Einfügen eines Faltwerkzeugs (48), vorzugsweise in den in Schritt b) gebildeten Spalt (54), und Umfalten des Längskantenbereichs (42, 44) in Richtung auf die Leiter (16) mittels des Faltwerkzeugs (48).

### Bezugszeichenliste:

- 10: Stator
- 12: Blechpaket
- 14: Nut (Wicklungsnut, zur Aufnahme von Leitern einer Spulenwicklung)
- 16: Leiter
- 18: Spulenwicklung
- 20: Nutisolierung
- 22: Nutdeckschieber
- 24: Bauteil
- 26: Nutgrund
- 28: erste Nutflanke
- 30: zweite Nutflanke
- 32: Einbuchtung/Rücksprung
- 34: Nutdeckschieber-Aufnahme-Nut
- 36: erster Schenkel
- 37: U-Steg
- 38: zweiter Schenkel
- 40: Längskante
- 41: Endkante
- 42: erster Längskantenbereich
- 44: zweiter Längskantenbereich
- 46: Überstand
- 48: Faltwerkzeug
- 49: Einführende
- 50: Teil
- 52: axiales Nutende
- 54: Spalt
- 56: Vorpositionierwerkzeug
- 58: Element
- 60: Andrücker
- 62: Düse
- 63: Druckluft
- 64: Falteinrichtung
- 66: Steuerung
- 68: Prozessor
- 70: Speicher
- 72: Bewegungseinrichtung
- 74: Aktor
- 76: Führung
- 78: Schwenkachse
- 80: Rücksprung
- 82: Werkzeugnut
- 84: Nutdeckschiebermontagevorrichtung
- 86: Herstellanlage

## Patentansprüche

1. Faltverfahren zum Falten einer Nutisolierung (20), umfassend:
a) Bereitstellen eines Bauteils (24) einer elektrischen Maschine mit wenigstens einer sich in axialer Richtung des Bauteils (24) erstreckenden Nut (14), mit in die Nut (14) eingesetzten Leitern (16) zum Bilden einer Spulenwicklung (18) und mit einer in der Nut (14) zwischen Nut (14) und Leitern (16) eingesetzten Nutisolierung (20) zur elektrischen Isolierung der Leiter (16) von dem die Nut (14) ausbildenden Bereich des Bauteils (24), wobei die Nutisolierung (20) einen ersten Schenkel (36) und einen zweiten Schenkel (38) aufweist, die zwischen den Leitern (16) und Nutflanken (28, 30) angeordnet sind, wobei bei wenigstens einem der Schenkel (36, 38) ein Längskantenbereich (42, 44) radial über die Leiter (16) vorsteht und in wenigstens einer axialen Richtung aus der Nut (14) herausragt,
b) Vorpositionieren des axial aus der Nut (14) herausragenden und radial über die Leiter (16) vorstehenden Teils (50) des Längskantenbereichs (42, 44), indem dieser Teil (50) in Richtung der Nutmitte bewegt wird;
c) Einfügen eines Faltwerkzeugs (48) zwischen dem in Schritt b) in Richtung der Nutmitte bewegten Teil (50) des Längskantenbereich (42, 44) und der Nutflanke (28, 30) und Umfalten des Längskantenbereichs (42, 44) in Richtung auf die Leiter (16) mittels des Faltwerkzeugs (48).

2. Faltverfahren nach Anspruch 1, **dadurch gekennzeichnet,**
**dass** in Schritt a) die Nutisolierung (20) derart bereitgestellt wird, dass die Längskantenbereiche (42, 44) des ersten und des zweiten Schenkels (36, 38) über die Leiter (16) vorstehen und in der wenigstens einen axialen Richtung aus der Nut (14) herausragen und dass in Schritt b) die axial aus der Nut (14) vorstehenden und radial über die Leiter (16) ragenden Eckbereiche des ersten und zweiten Schenkels (36, 38) zueinander bewegt werden, und dass in Schritt c) der Längskantenbereich (42, 44) des ersten und des zweiten Schenkels (36, 38) mittels eines oder mehrerer zwischen den jeweiligen Eckbereich und der jeweiligen Nutflanke (28, 30) eingefügter Faltwerkzeuge (48) umgefaltet werden.

3. Faltverfahren nach einem der voranstehenden Ansprüche, **dadurch gekennzeichnet,**
**dass** Schritt a) wenigstens einen oder mehrere der Schritte enthält:
a1) Bereitstellen eines Statorbauteils, in dem eine Vielzahl der Nuten (14) vorgesehen sind;
a2) Bereitstellen eines Blechpakets (12) mit einer Vielzahl der Nuten (14);
a3) Bereitstellen eines Isolationspapiers oder einer Isolationsfolie als Nutisolierung (20);
a4) Bereitstellen der Nutisolierung (20) mit U-förmigem Profil, mit einem an dem Grund (26) der Nut (14) angeordneten U-Steg (37) und dem an einer ersten Flanke (28) der Nut (14) angeordneten ersten Schenkel (36) und dem an einer zweiten Flanke (30) der Nut (14) angeordneten zweiten Schenkel (38);
a5) Bereitstellen des Bauteils (24) mit der Nut (14) derart, dass in einem Mündungsbereich der Nut (14) Einbuchtungen oder Rücksprünge (32, 34) für die formschlüssige Aufnahme eines Nutdeckschiebers (22) vorgesehen sind.

4. Faltverfahren nach einem der voranstehenden Ansprüche, **dadurch gekennzeichnet,**
**dass** Schritt b) wenigstens einen oder mehrere der Schritte enthält:
b0) Erzeugen eines Spalts (54) am axialen Nutende (52) zwischen dem Längskantenbereich (42, 44) und der Nutflanke (28, 30), in welchen Spalt (54) in Schritt c) das Faltwerkzeug (48) eingeführt wird;
b1) Drücken des axial vorstehenden Teils (50) des Längskantenbereichs (42, 44) nach innen zur Mitte der Nut (14);
b2) Bereitstellen eines Vorpositionierwerkzeugs (56) an der axialen Seite des Bauteils (24), wo der Längskantenbereich (42, 44) axial vorsteht, und Durchführen des Vorpositionierens mit dem Vorpositionierwerkzeug (56).

5. Faltverfahren nach einem der voranstehenden Ansprüche, **dadurch gekennzeichnet,**
**dass** Schritt b) wenigstens einen oder mehrere der Schritte enthält:
b3) Bereitstellen eines Vorpositionierwerkzeugs (56) mit wenigstens einem in Umfangsrichtung bewegbaren Andrücker (60);
b4) Bereitstellen eines Vorpositionierwerkzeugs (56) mit einem Rücksprung (80) oder einer Werkzeugnut (82), in den oder in die ein Faltwerkzeug (48) und/oder ein einzuführender Nutdeckschieber (22) und/oder ein Nutdeckschiebereinführwerkzeug zum Einführen eines Nutdeckschiebers (22) eingreifen kann;
b5) Bereitstellen eines Vorpositionierwerkzeugs (56) mit einem ersten und zweiten Andrücker (60), die in Umfangsrichtung aufeinander zu und voneinander weg bewegbar sind und mit denen die axial aus der Nut (14) vorstehenden und radial über die Leiter (16) vorstehenden Teile (50) der Längskantenbereiche (42, 44) des ersten und zweiten Schenkels (36, 38) aufeinander zu bewegt werden;
b6) Schwenken wenigstens eines Andrückers (60) um eine Schwenkachse (78) beim Vorpositionieren;
b7) Bereitstellen eines Vorpositionierwerkzeug (56) mit zangenartig zueinander schwenkbaren Andrückern (60);
b8) paralleles Zustellen von Andrückern (60) beim Vorpositionieren;
b9) Vorpositionieren mit Druckluft (63).

6. Faltverfahren nach einem der Ansprüche 4 oder 5, **dadurch gekennzeichnet,**
**dass** das Vorpositionierwerkzeug (56) aktiv mittels eines eigenen Aktors (74) angetrieben wird oder passiv beim Einführen eines Nutdeckschiebers (22) und/oder durch ein Nutdeckschiebereinführwerkzeug zum Einführen eines Nutdeckschiebers (22) angetrieben wird.

7. Nutdeckschiebermontageverfahren zum Montieren eines Nutdeckschiebers (22) in einer mit Leitern (16) und Nutisolierung (20) versehenen Nut (14) eines Bauteils (24) einer elektrischen Maschine, umfassend Durchführen des Faltverfahrens nach einem der voranstehenden Ansprüche und Einführen des Nutdeckschiebers (22) über die gefaltete Nutisolierung (20) in der Nut (14).

8. Falteinrichtung (64) zum Falten einer Nutisolierung (20), die in eine sich in axialer Richtung erstreckende Nut (14) eines Bauteils (24) einer elektrischen Maschine eingesetzt ist, um in die Nut (14) eingesetzte Leiter (16) zum Bilden einer Spulenwicklung (18) elektrisch von dem die Nut (14) ausbildenden Bereich des Bauteils (24) zu isolieren, wobei die Nutisolierung (20) einen ersten Schenkel (36) und einen zweiten Schenkel (38) aufweist, die zwischen den Leitern (16) und Nutflanken (28, 30) angeordnet sind, wobei bei wenigstens einem der Schenkel (36, 38) ein Längskantenbereich (42, 44) radial über die Leiter (16) vorsteht und in wenigstens einer axialen Richtung aus der Nut (14) herausragt, wobei die Falteinrichtung (64) ein Vorpositionierwerkzeug (56) zum Vorpositionieren des axial aus der Nut (14) herausragenden und radial über die Leiter (16) vorstehenden Teils (50) des Längskantenbereichs (42, 44) aufweist, welches Vorpositionierwerkzeug (56) dazu eingerichtet ist, den axial aus der Nut (14) vorstehenden Teil (50) des Längskantenbereichs (42, 44) in Richtung der Nutmitte zu bewegen, und mit einem Faltwerkzeug (48), das dazu eingerichtet ist, zwischen dem durch das Vorpositionieren am axialen Anfang der Nut (14) zur Nutmitte bewegten Teil des Längskantenbereichs (42, 44) und der Nutflanke (28, 30) einzugreifen und den Längskantenbereich (42, 44) im gesamten Verlauf der Nut (14) in Richtung auf die Leiter (16) zu falten.

9. Falteinrichtung (64) nach Anspruch 8, **dadurch gekennzeichnet,**
**dass** das Vorpositionierwerkzeug (56)
9.1 im bestimmungsgemäßen Gebrauch axial seitlich des Bauteils (24) positioniert ist; und/oder
9.2 wenigstens einen Andrücker (60) zum Drücken des axial aus der Nut (14) vorstehenden Teils (50) des Längskantenbereichs (42, 44) in Richtung Nutmitte aufweist; und/oder
9.3 einen ersten und einen zweiten in Umfangsrichtung aufeinander zu und voneinander weg bewegbaren Andrücker (60) aufweist; und/oder
9.4 wenigstens ein bewegbares Element (58) zum Angreifen an dem axial vorstehenden Längskantenbereich (42, 44) aufweist, welches mit wenigstens einem Rücksprung (80) oder wenigstens einer Werkzeugnut (82) versehen ist, in die das Faltwerkzeug (48) oder ein Nutdeckschiebermontagewerkzeug oder ein in die Nut (14) einzusetzender Nutdeckschieber (22) eingreifen kann; und/oder
9.5 wenigstens eine Düse (62) aufweist und dazu eingerichtet ist, den axial aus der Nut (14) vorstehenden Teil (50) des Längskantenbereichs (42, 44) mittels Druckluft (63) durch die Düse (62) anzublasen, um ihn in Richtung der Nutmitte zu bewegen.

10. Falteinrichtung (64) nach Anspruch 9, **dadurch gekennzeichnet**,
10.1 dass der wenigstens eine Andrücker (60) um eine Schwenkachse (78) schwenkbar ist; und/oder
10.2 dass der erste und zweite Andrücker (60) zangenartig zueinander bewegbar sind; oder
10.3 dass der wenigstens eine Andrücker (60) in Umfangsrichtung verschiebbar ist; und/oder
10.4 dass der erste und der zweite Andrücker (60) in Umfangsrichtung antiparallel zueinander verschiebbar sind.

11. Nutdeckschiebermontagevorrichtung (84), umfassend eine Falteinrichtung (64) nach einem der Ansprüche 8 bis 10 und eine Nutdeckschiebereinführeinrichtung zum Einführen eines Nutdeckschiebers (22) über die gefaltete Nutisolierung (20) in die Nut (14).

12. Herstellanlage (86) zum Herstellen eines Stators (10), umfassend eine Falteinrichtung (64) nach einem der Ansprüche 8 bis 10 und/oder eine Nutdeckschiebermontagevorrichtung (84) nach Anspruch 11.

13. Computerimplementierte Steuerung (66) für eine Falteinrichtung (64) nach Anspruch 8 bis 11, eine Nutdeckschiebermontagevorrichtung (84) nach Anspruch 11 oder eine Herstellanlage (86) nach Anspruch 12, wobei die Steuerung (86) dazu eingerichtet ist, die Falteinrichtung (64) zum Durchführen des Faltverfahrens nach einem der Ansprüche 1 bis 6 anzusteuern oder die Nutdeckschiebermontagevorrichtung (84) zum Durchführen des Nutdeckschiebermontageverfahrens nach Anspruch 7 anzusteuern.

14. Computerprogramm, umfassend Anweisungen, die bei der Ausführung durch einen Computer diesen veranlassen, eine Einrichtung (64) Vorrichtung (84) oder Anlage (86) nach einem der Ansprüche 8 bis 12 dazu veranlassen, das Verfahren nach einem der Ansprüche 1 bis 7 durchzuführen.

15. Falteinrichtung (64) nach einem der Ansprüche 8 bis 12, Nutdeckschiebermontagevorrichtung (84) nach Anspruch 11 oder Herstellanlage (86) nach Anspruch 12, **gekennzeichnet durch** eine Steuerung (66) nach Anspruch 13 oder **durch** eine Steuerung (66) umfassend einen Prozessor (68) und einen Speicher (70), in dem ein Computerprogramm nach Anspruch 14 geladen ist.

## Claims

1. Folding method for folding a slot insulation (20), comprising:
a) providing a component (24) of an electrical machine with at least one slot (14) extending in the axial direction of the component (24), with conductors (16) inserted into the slot (14) to form a coil winding (18) and with a slot insulation (20) inserted into the slot (14) between the slot (14) and the conductors (16) for electrically insulating the conductors (16) from the region of the component (24) forming the slot (14), wherein the slot insulation (20) has a first leg (36) and a second leg (38) which are arranged between the conductors (16) and slot flanks (28, 30), wherein in at least one of the legs (36, 38) a longitudinal edge region (42, 44) protrudes radially over the conductors (16) and projects out of the slot (14) in at least one axial direction,
b) pre-positioning the part (50) of the longitudinal edge region (42, 44) projecting axially out of the slot (14) and protruding radially over the conductors (16) by moving this part (50) towards the center of the slot;
c) inserting a folding tool (48) between the part (50) of the longitudinal edge region (42, 44) moved in step b) in the direction of the slot center and the slot flank (28, 30) and folding the longitudinal edge region (42, 44) towards the conductor (16) by means of the folding tool (48).

2. Folding method according to claim 1, **characterized in that** in step a), the slot insulation (20) is provided in such a way that the longitudinal edge regions (42, 44) of the first and the second leg (36, 38) protrude over the conductors (16) and project out of the slot (14) in at least one axial direction, and in step b), the corner regions of the first and the second leg (36, 38) projecting axially out of the slot (14) and protruding radially over the conductors (16) are moved relative to one another, and in step c), the longitudinal edge region (42, 44) of the first and the second leg (36, 38) are folded over by means of one or more folding tools (48) inserted between the respective corner region and the respective slot flank (28, 30).

3. Folding method according to any one of the preceding claims, **characterized in that**
step a) comprises at least one or more of the following steps:
a1) providing a stator component in which a plurality of slots (14) are provided;
a2) providing a laminated core (12) with a plurality of slots (14);
a3) providing an insulating paper or an insulating film as slot insulation (20);
a4) providing the slot insulation (20) with a U-shaped profile, with a U-web (36) arranged on the base (26) of the slot (14) and the first leg (36) arranged on a first flank (28) of the slot (14) and the second leg (38) arranged on a second flank (30) of the slot (14);
a5) providing the component (24) having the slot (14) in such a way that indentations or recesses (32, 34) are provided in a mouth region of the slot (14) for the form-fitting reception of a slot cover slide (22).

4. Folding method according to any one of the preceding claims, **characterized in that**
step b) comprises at least one or more of the following steps:
b0) creating a gap (54) at the axial slot end (52) between the longitudinal edge region (42, 44) and the slot flank (28, 30), into which gap (54) the folding tool (48) is introduced in step c);
b1) pressing the axially protruding part (50) of the longitudinal edge region (42, 44) inward towards the center of the slot (14);
b2) providing a pre-positioning tool (56) on the axial side of the component (24) where the longitudinal edge region (42, 44) projects axially, and performing pre-positioning using the pre-positioning tool (56).

5. Folding method according to any one of the preceding claims, **characterized in that**
step b) includes at least one or more of the following steps:
b3) providing a pre-positioning tool (56) with at least one presser (60) movable in the circumferential direction;
b4) providing a pre-positioning tool (56) with a recess (80) or a tool slot (82) into which a folding tool (48) and/or a slot cover slide (22) to be inserted and/or a slot cover slide insertion tool for inserting a slot cover slide (22) can engage;
b5) providing a pre-positioning tool (56) with a first and a second presser (60), which can be moved in the circumferential direction towards each other and away from each other and with which the parts (50) of the longitudinal edge regions (42, 44) of the first and the second leg (36, 38) projecting axially out of the slot (14) and protruding radially over the conductors (16) are moved towards each other;
b6) pivoting at least one presser (60) about a pivot axis (78) during pre-positioning;
b7) providing a pre-positioning tool (56) with pressers (60) that can be pivoted towards each other in the manner of pincers;
b8) parallel feeding of pressers (60) during pre-positioning;
b9) pre-positioning using compressed air (63).

6. Folding method according to any one of claims 4 or 5, **characterized in that** the pre-positioning tool (56) is actively driven by its own actuator (74) or passively driven during the insertion of a slot cover slide (22) and/or by a slot cover slide insertion tool for inserting a slot cover slide (22).

7. Slot cover slide mounting method for mounting a slot cover slide (22) in a slot (14) of a component (24) provided with conductors (16) and a slot insulation (20) of an electrical machine, comprising performing the folding method according to one of the preceding claims and inserting the slot cover slide (22) over the folded slot insulation (20) in the slot (14).

8. Folding device (64) for folding a slot insulation (20) which is inserted into a slot (14) extending in the axial direction of a component (24) of an electrical machine in order to electrically insulate conductors (16) inserted into the slot (14) to form a coil winding (18) from the region of the component (24) forming the slot (14), wherein the slot insulation (20) has a first leg (36) and a second leg (38) which are arranged between the conductors (16) and slot flanks (28, 30), wherein in at least one of the legs (36, 38), a longitudinal edge region (42, 44) protrudes radially over the conductors (16) and projects out of the slot (14) in at least one axial direction, wherein the folding device (64) comprises a pre-positioning tool (56) for pre-positioning the part (50) of the longitudinal edge region (42, 44) projecting axially out of the slot (14) and protruding radially over the conductors (16), which pre-positioning tool (56) is designed to move the part (50) of the longitudinal edge region (42, 44) projecting axially out of the slot (14) towards the center of the slot, and with a folding tool (48) which is designed to engage between the part of the longitudinal edge region (42, 44) moved towards the center of the slot by the pre-positioning at the axial beginning of the slot (14) and the slot flank (28, 30) and fold the longitudinal edge region (42, 44) in the entire run of the slot (14) towards the conductors (16).

9. Folding device (64) according to claim 8, **characterized in that** the pre-positioning tool (56)
9.1 is positioned axially laterally of the component (24) during intended use; and/or
9.2 has at least one presser (60) for pressing the part (50) of the longitudinal edge region (42, 44) projecting axially out of the slot (14) towards the center of the slot; and/or
9.3 has a first and a second presser (60) which can be moved towards each other and away from each other in the circumferential direction; and/or
9.4 has at least one movable element (58) for engaging at the axially protruding longitudinal edge region (42, 44), which element is provided with at least one recess (80) or at least one tool slot (82) into which the folding tool (48) or a slot cover slide mounting tool or a slot cover slide (22) to be inserted into the slot (14) can engage; and/or
9.5 has at least one nozzle (62) and is designed to blow the part (50) of the longitudinal edge region (42, 44) projecting axially out of the slot (14) with compressed air (63) through the nozzle (62) in order to move it towards the center of the slot.

10. Folding device (64) according to claim 9, **characterized in that**
10.1 the at least one presser (60) is pivotable about a pivot axis (78); and/or
10.2 the first and the second presser (60) are movable towards each other in the manner of pincers; or
10.3 the at least one presser (60) is displaceable in the circumferential direction; and/or
10.4 the first and the second presser (60) are displaceable in the circumferential direction in an antiparallel manner relative to each other.

11. Slot cover slide mounting apparatus (84) comprising a folding device (64) according to any one of claims 8 to 10 and a slot cover slide insertion device for inserting a slot cover slide (22) over the folded slot insulation (20) in the slot (14).

12. Manufacturing system (86) for manufacturing a stator (10), comprising a folding device (64) according to one of claims 8 to 10 and/or a slot cover slide mounting apparatus (84) according to claim 11.

13. Computer-implemented control unit (66) for a folding device (64) according to claims 8 to 11, a slot cover slide mounting apparatus (84) according to claim 11 or a manufacturing system (86) according to claim 12, wherein the control unit (86) is configured to control the folding device (64) to perform the folding method according to one of claims 1 to 6 or to control the slot cover slide mounting apparatus (84) to perform the slot cover slide mounting method according to claim 7.

14. Computer program comprising instructions which, when executed by a computer, cause a device (64), apparatus (84) or system (86) according to one of claims 8 to 12 to carry out the method according to one of claims 1 to 7.

15. A folding device (64) according to any one of claims 8 to 12, a slot cover slide mounting apparatus (84) according to claim 11 or a manufacturing system (86) according to claim 12, **characterized by** a control unit (66) according to claim 13 or by a control unit (66) comprising a processor (68) and a memory (70) in which a computer program according to claim 14 is loaded.

## Revendications

1. Procédé de pliage pour plier une isolation de fente (20) comprenant:
a) fournir un composant (24) d'une machine électrique comportant au moins une fente (14) s'étendant dans la direction axiale du composant (24), avec des conducteurs (16) insérés dans la fente (14) pour former un enroulement de bobine (18), et avec une isolation de fente (20) insérée dans la fente (14) entre la fente (14) et les conducteurs (16) pour l'isolation électrique du conducteur (16) par rapport à la région du composant (24) formant la fente (14), dans laquelle l'isolation de fente (20) comprend une première branche (36) et une deuxième branche (38), lesquelles branches sont disposées entre les conducteurs (16) et les flancs de la fente (28, 30), dans lequel, dans au moins l'une des branches (36, 38), une zone de bord longitudinale (42, 44) fait saillie radialement au-delà des conducteurs (16) et fait saillie hors de la fente (14) dans au moins une direction axiale,
b) prépositionner la partie (50) de la zone de bord longitudinale (42, 44) faisant saillie axialement hors de la fente (14) et radialement au-delà des conducteurs (16) en déplaçant cette partie (50) vers le centre de la fente;
c) insérer un outil de pliage (48) entre la partie (50) de la zone de bord longitudinale (42, 44) déplacée vers le centre de la fente à l'étape b) et le flanc de la fente (28, 30), et plier la zone de bord longitudinale (42, 44) sur le conducteur (16) à l'aide de l'outil de pliage (48).

2. Procédé de pliage selon la revendication 1, **caractérisé en ce que** à l'étape a), l'isolation de fente (20) est fournie de telle sorte que les zones de bord longitudinales (42, 44) des première et deuxième branches (36, 38) font saillie au-delà des conducteurs (16) et font saillie hors de la fente (14) dans au moins une direction axiale, et **en ce que**, à l'étape b), les zones d'angle des première et deuxième branches (36, 38) faisant saillie axialement hors de la fente (14) et radialement au-delà des conducteurs (16) sont rapprochées l'une de l'autre, et **en ce que**, à l'étape c), les zones de bord longitudinales (42, 44) des première et deuxième branches (36, 38) sont pliées au moyen d'un ou plusieurs outils de pliage (48) insérés entre la zone d'angle respective et le flanc de fente respectif (28, 30).

3. Procédé de pliage selon l'une quelconque des revendications précédentes, **caractérisé en ce que**
l'étape a) comprend au moins l'une ou plusieurs des étapes suivantes:
a1) fournir un composant de stator comportant une pluralité de fentes (14);
a2) fournir un paquet de tôles (12) comprenant une pluralité de fentes (14);
a3) fournir un papier isolant ou un film isolant servant d'isolation de fente (20);
a4) fournir l'isolation de fente (20) ayant un profil en U avec une âme en U (37) disposée au fond (26) de la fente (14) et avec la première branche (36) disposée sur un premier flanc (28) de la fente (14) et avec la deuxième branche (38) disposée sur un deuxième flanc (30) de la fente (14);
a5) fournir le composant (24) avec la fente (14) de telle sorte que des indentations ou des évidements (32, 34) soient prévus pour le logement par complémentarité de forme d'une fermeture de fente (22).

4. Procédé de pliage selon l'une quelconque des revendications précédentes, **caractérisé en ce que**
l'étape b) comprend au moins une ou plusieurs des étapes suivantes:
b0) la réalisation d'un espace (54) à l'extrémité axiale de fente (52) entre la zone de bord longitudinale (42, 44) et le flanc de fente (28, 30), espace (54) dans lequel l'outil de pliage (48) est inséré à l'étape c);
b1) presser la partie saillante axialement (50) de la zone de bord longitudinale (42, 44) vers l'intérieur en direction du centre de la fente (14);
b2) prévoir un outil de pré-positionnement (56) sur le côté axial du composant (24) où la zone de bord longitudinale (42, 44) fait saillie axialement et effectuer un pré-positionnement à l'aide de l'outil de pré-positionnement (56).

5. Procédé de pliage selon l'une quelconque des revendications précédentes, **caractérisé en ce que**
l'étape b) comprend au moins l'une ou plusieurs des étapes suivantes:
b3) prévoir un outil de pré-positionnement (56) comportant au moins un poussoir (60) mobile dans la direction circonférentielle;
b4) prévoir un outil de pré-positionnement (56) comportant un évidement (80) ou une rainure d'outil (82) dans lequel un outil de pliage (48) et/ou une fermeture de fente (22) à insérer et/ou un outil d'insertion de fermeture de fente destiné à l'insertion de la fermeture de fente (22) peuvent s'engager;
b5) prévoir un outil de pré-positionnement (56) comportant un premier et deuxième poussoir (60) pouvant être rapprochés et éloignés l'un de l'autre dans la direction circonférentielle et à l'aide desquels les parties (50) des zones de bord longitudinales (42, 44) de la première branche et de la deuxième branche (36, 38) faisant saillie axialement de la fente (14) et radialement au-delà des conducteurs (16) sont rapprochées l'une de l'autre;
b6) faire pivoter au moins un poussoir (60) autour de l'axe de pivotement (78) pendant le pré-positionnement ;
b7) prévoir un outil de pré-positionnement (56) muni de poussoirs (60) pouvant pivoter l'un par rapport à l'autre à la manière d'une pince;
b8) l'avance parallèle des poussoirs (60) pendant le pré-positionnement ;
b9) le pré-positionnement à l'aide d'air comprimé (63).

6. Procédé de pliage selon l'une quelconque des revendications 4 ou 5, **caractérisé en ce que**
l'outil de pré-positionnement (56) est entraîné activement au moyen d'un actionneur dédié (74) ou passivement pendant l'insertion d'une fermeture de fente (22) et/ou au moyen d'un outil d'insertion de fermeture de fente destiné à insérer un cache-fente (22).

7. Procédé de montage de fermeture de fente pour monter une fermeture de fente (22) dans une fente (14) d'un composant (24) d'une machine électrique pourvue de conducteurs (16), comprenant la mise en œuvre du procédé de pliage selon l'une quelconque des revendications précédentes et l'insertion de la fermeture de fente (22) sur l'isolant de fente plié (20) dans la fente (14).

8. Dispositif de pliage (64) destiné à plier une isolation de fente (20) qui est insérée dans une fente (14) d'un composant (24) d'une machine électrique s'étendant dans la direction axiale afin d'isoler électriquement des conducteurs (16) insérés dans la fente (14) pour former un enroulement de bobine (18) à partir de la région du composant (24) formant la fente (14), dans lequel l'isolant de fente (20) comporte une première branche (36) et une deuxième branche (38) qui sont disposées entre les conducteurs (16) et les flancs de fente (28, 30), dans lequel, dans au moins une branche (36, 38), une zone de bord longitudinale (42, 44) fait saillie radialement au-delà des conducteurs (16) et fait saillie hors de la fente (14) dans au moins une direction axiale, dans lequel le dispositif de pliage (64) comprend un outil de pré-positionnement (56) destiné à prépositionner la partie (50) de la zone de bord longitudinale (42, 44) faisant saillie axialement hors de la fente (14) et radialement au-delà des conducteurs (16), lequel outil de pré-positionnement (56) est configuré pour déplacer la partie (50) faisant saillie axialement hors de la fente (14) vers le centre de la fente, et un outil de pliage (48) configuré pour s'engager entre la partie de la zone de bord longitudinale (42, 44), qui a été déplacée vers le centre de la fente par le pré-positionnement au début axial de la fente (14), et le flanc de la fente (28, 30) et de plier la zone de bord longitudinal (42, 44) vers les conducteurs (16) sur toute la longueur de la fente (14).

9. Dispositif de pliage (64) selon la revendication 8, **caractérisé en ce que** l'outil de pré-positionnement (56)
9.1 est positionné axialement sur le côté du composant (24) lors de son utilisation conforme; et/ou
9.2 comprend au moins un poussoir (60) destiné à pousser la partie (50) de la zone de bord longitudinale (42, 44) faisant saillie axialement de la fente (14) vers le centre de la fente; et/ou
9.3 comprend un premier et un deuxième poussoir (60) pouvant se rapprocher et s'éloigner l'un de l'autre dans la direction circonférentielle; et/ou
9.4 comprend au moins un élément mobile (58) destiné à venir en prise avec la zone de bord longitudinal faisant saillie axialement (42, 44), lequel élément mobile est muni d'au moins un évidement (80) ou d'au moins une rainure d'outil (82) dans laquelle l'outil de pliage (48) ou un outil de montage de fermeture de fente ou une fermeture de fente (22) à insérer dans la fente (14) peut s'engager; et/ou
9.5 comprend au moins une buse (62) et est configuré pour souffler de l'air sous pression (63) à travers la buse (62) au niveau de la partie (50) de la zone de bord longitudinal (42, 44) faisant saillie axialement de la fente (14) afin de la déplacer vers le centre de la fente.

10. Dispositif de pliage (64) selon la revendication 9, **caractérisé en ce que**
10.1 ledit au moins un poussoir (60) est pivotant autour d'un axe de pivotement (78); et/ou
10.2 le premier et le deuxième poussoir (60) sont mobiles l'un vers l'autre à la manière d'une pince; ou
10.3 ledit au moins un poussoir (60) est mobile dans la direction circonférentielle; et/ou
10.4 le premier et le deuxième poussoir (60) sont mobiles de manière antiparallèle l'un par rapport à l'autre dans la direction circonférentielle.

11. Dispositif de montage de fermeture de fente (84), comprenant un dispositif de pliage (64) selon l'une quelconque des revendications 8 à 10 et un dispositif d'insertion de fermeture de fente destiné à insérer une fermeture de fente (22) sur l'isolant de fente plié (20) dans la fente (14).

12. Système de fabrication (86) destiné à fabriquer un stator (10), le système de fabrication comprenant un dispositif de pliage (64) selon l'une quelconque des revendications 8 à 10 et/ou un dispositif de montage de fermeture de fente (84) selon la revendication 11.

13. Contrôleur mis en oeuvre par ordinateur (66) pour un dispositif de pliage (64) selon les revendications 8 à 11, un dispositif de montage de fermeture de fente (84) selon la revendication 11 ou un système de fabrication (86) selon la revendication 12, dans lequel le contrôleur (66) est configuré pour commander le dispositif de pliage (64) afin d'exécuter le procédé de pliage selon l'une quelconque des revendications 1 à 6 ou pour commander le dispositif de montage de fermeture de fente (84) afin d'exécuter le procédé de montage de fermeture de fente selon la revendication 7.

14. Programme informatique comprenant des instructions qui, lorsqu'elles sont exécutées par un ordinateur, amènent l'ordinateur à faire en sorte qu'un dispositif (64), un dispositif (84) ou un système (86) selon l'une quelconque des revendications 8 à 12 mette en œuvre le procédé selon l'une quelconque des revendications 1 à 7.

15. Dispositif de pliage (64) selon l'une quelconque des revendications 8 à 12, un dispositif de montage de fermeture de fente (84) selon la revendication 11 ou un système de fabrication (86) selon la revendication 12, **caractérisé par** un contrôleur (66) selon la revendication 13 ou un contrôleur (66) comprenant un processeur (68) et une mémoire (70) dans laquelle est chargé un programme informatique selon la revendication 14.
